(19) Europäisches Patentamt
European Patent Office
Office européen des brevets

(11) **EP 4 393 628 A1**

(12) **EUROPEAN PATENT APPLICATION**
published in accordance with Art. 153(4) EPC

(43) Date of publication:
**03.07.2024 Bulletin 2024/27**

(21) Application number: **22889896.1**

(22) Date of filing: **28.10.2022**

(51) International Patent Classification (IPC):
**B23K 11/11** (2006.01)    **B23K 11/24** (2006.01)
**C22C 38/00** (2006.01)    **C22C 38/60** (2006.01)

(52) Cooperative Patent Classification (CPC):
**B23K 11/11; B23K 11/24; C22C 38/00; C22C 38/60**

(86) International application number:
**PCT/JP2022/040410**

(87) International publication number:
**WO 2023/080076 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.11.2021 JP 2021179559**

(71) Applicant: **JFE Steel Corporation
Tokyo 100-0011 (JP)**

(72) Inventors:
• **SAWANISHI, Chikaumi
Tokyo 100-0011 (JP)**

• **YAMAGISHI, Daiki
Tokyo 100-0011 (JP)**
• **KAWABE, Nao
Tokyo 100-0011 (JP)**
• **TANIGUCHI, Koichi
Tokyo 100-0011 (JP)**
• **TAKASHIMA, Katsutoshi
Tokyo 100-0011 (JP)**

(74) Representative: **Haseltine Lake Kempner LLP
Cheapside House
138 Cheapside
London EC2V 6BJ (GB)**

(54) **RESISTANCE SPOT WELDED MEMBER, AND RESISTANCE SPOT WELDING METHOD FOR SAME**

(57)    It is an object to provide a resistance spot welded member and a resistance spot welding method therefor. The resistance spot welded member of the invention includes a plurality of overlapping steel sheets, and at least one of the steel sheets is a galvanized steel sheet having a Zn-based coated layer on its steel sheet surface. The concentration of Fe in a Zn alloy layer formed between two steel sheets of the plurality of overlapping steel sheets is denoted as $C_{Fe}$ (mass%), and the distance from the edge of the nugget to the position at which $C_{Fe}$ is measured is denoted as L (pm). Then $C_{Fe}$ and L satisfy the relations of the following formulas (1) and (2).

$$C_{Fe} \geq 20 \qquad (1)$$

$$0 < L \leq 500 \qquad (2)$$

FIG. 2

EP 4 393 628 A1

**Description**

Technical Field

The present invention relates to a member formed by resistance-spot-welding a plurality of steel sheets and more particularly to a resistance spot welded member suitable for members of structural parts of automobiles etc. and a resistance spot welding method therefor.

Background Art

In recent years, increasing environmental concerns have led to stringent $CO_2$ emission regulations. One challenge in the field of automobiles is to reduce the weight of vehicle bodies for the purpose of improving fuel economy. Therefore, automotive parts are being reduced in thickness by using high strength steel sheets, and steel sheets having a tensile strength (TS) of 980 MPa or more are being increasingly used.

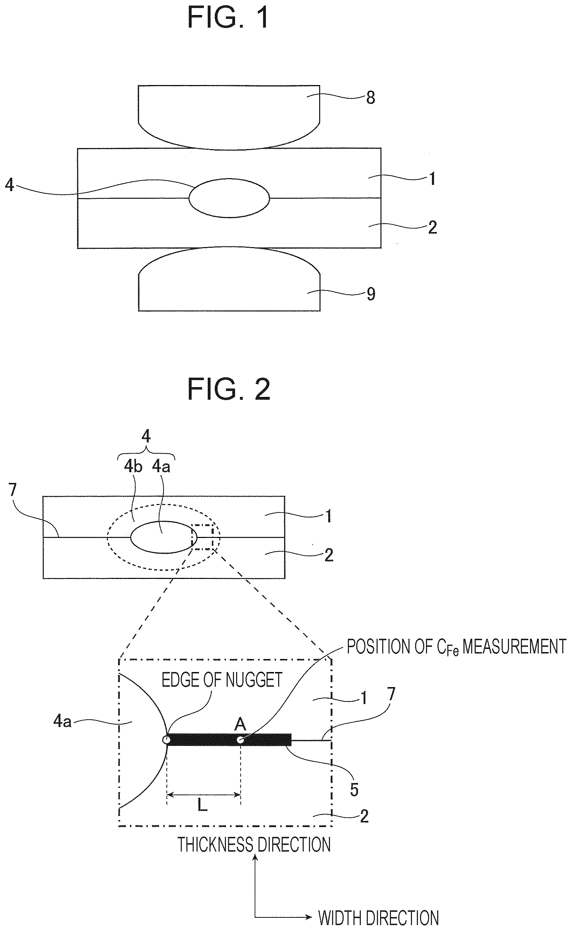

In automotive assembly, press-formed automotive parts are often combined together by resistance spot welding, from the viewpoint of cost and production efficiency. To join overlapping steel sheets together, a resistance spot welding method, which is one type of lap resistance welding, is generally used. In this welding method, as shown in Fig. 1, two or more overlapping steel sheets 1 and 2 are held between a pair of welding electrodes 8 and 9, and a high welding current is applied between the upper and lower welding electrodes for a short time while the steel sheets are pressed from the upper and lower sides of the steel sheets by the pair of welding electrodes 8 and 9 to thereby join the steel sheets together. In Fig. 1, the two overlapping steel sheets are shown. A spot-shaped weld 4 is obtained by utilizing resistance heat generated by the application of the high welding current. The spot-shaped weld 4 is called a nugget. Specifically, when the current is applied to the overlapping steel sheets, the steel sheets 1 and 2 are melted at their contact portion and then solidified to form the nugget, and the steel sheets are thereby jointed together to the spot shape.

To ensure crash safety, it is necessary to improve the strength of the steel sheets and to improve the strength of the weld. Various methods have been used to evaluate the strength of the resistance spot weld, and one general evaluation method is a tensile shear test specified in JIS Z 3136. In this test method, a tensile load is applied to a welded joint in a tensile shear direction to measure the tensile shear strength (hereinafter referred to as TSS).

When high strength steel sheets are used for automotive parts, steel sheets with coatings such zinc (Zn) having a rustproofing function are used for portions to be exposed to rainwater, from the viewpoint of corrosion resistance. However, one problem with resistance spot welding of a sheet set including a plurality of overlapping steel sheets including a surface-treated steel sheet is that cracking can occur in the weld. The surface-treated steel sheet is a steel sheet having a metal coated layer on the surface of a base material (base steel sheet). Examples of the metal coating include: zinc coatings typified by electrogalvanized coatings and hot-dip galvanized coatings (including hot-dip galvannealed coatings); and zinc alloy coatings containing, in addition to zinc, another element such as aluminum or magnesium. The melting points of the zinc coatings and the zinc alloy coatings are lower than the melting point of the base material, and therefore the following problem occurs.

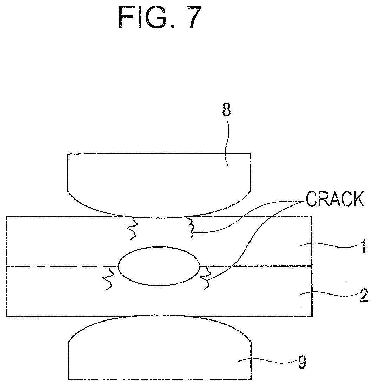

It has been considered that the cracking in the weld is caused by so-called liquid metal embrittlement (hereinafter referred to as "LME cracking"). Specifically, the low-melting point metal coated layer on the surface of the steel sheet melts during welding. When the welding pressure from the electrodes or tensile stress due to thermal expansion and contraction of the steel sheets is applied to the weld, the molten low-melting point metal penetrates into grain boundaries of the base material of the surface-treated steel sheet and causes a reduction in grain boundary strength, and the cracking thereby occurs. The LME cracking occurs at various positions such as the surfaces of the steel sheets 1 and 2 that are in contact with the welding electrodes 8 and 9 and the surfaces of the steel sheets 1 and 2 on which the steel sheets are in contact with each other, as shown in Fig. 7.

Examples of the measures against the LME cracking include techniques in Patent Literature 1 to Patent Literature 4. In Patent Literature 1, a steel sheet in a sheet set has a chemical composition in a specific range. Specifically, the steel sheet proposed has a chemical composition including, in % by weight, C: 0.003 to 0.01%, Mn: 0.05 to 0.5%, P: 0.02% or less, sol. Al: 0.1% or less, Ti: $48 \times (N / 14)$ to $48 \times \{(N / 14) + (S / 32)\}$%, Nb: $93 \times (C / 12)$ to 0.1%, B: 0.0005 to 0.003%, N: 0.01% or less, and Ni: 0.05% or less, with the balance being Fe and incidental impurities.

Patent Literature 2 proposes a spot welding method for high strength coated steel sheets. In this method, spot welding is performed while the welding energization time and the holding time after welding energization are set such that the following conditions (1) and (2) are satisfied.

$$0.25 \times (10 \times t + 2) / 50 \leq WT \leq 0.50 \times (10 \times t + 2) / 50 \qquad (1)$$

$$300 - 500 \times t + 250 \times t^2 \leq HT \qquad (2)$$

In the conditions (1) and (2), t is the thickness (mm) of the sheets, WT is the welding energization time (ms), and HT is the holding time (ms) after welding energization.

Patent Literature 2 also proposes that the spot welding is performed using high strength galvanized steel sheets with the amounts of alloy elements set to be equal to or less than a specific value while the energization time and the holding time of the electrodes after energization are set according to the thickness of the steel sheets.

Patent Literature 3 proposes a spot welding method that uses an energization pattern including multi-stage energization having three or more stages. Welding conditions such as energization time and welding current are controlled such that an appropriate current range (ΔI: a current range in which a nugget having a diameter equal to or more than a desired nugget diameter and an unmelted thickness is 0.05 mm or more can be stably formed) is 1.0 kA or more and preferably 2.0 kA or more, and a cooling time is provided between stages.

Patent Literature 4 proposes a technique in which coated layers in portions to be welded are removed before spot welding to prevent LME cracking.

Citation List

Patent Literature

PTL 1: Japanese Unexamined Patent Application Publication No. 10-195597
PTL 2: Japanese Unexamined Patent Application Publication No. 2003-103377
PTL 3: Japanese Unexamined Patent Application Publication No. 2003-236676
PTL 4: International Publication No. WO2016/159169

Summary of Invention

Technical Problem

However, one problem with Patent Literature 1 is that, since it is necessary to impose limitations on the amounts of alloy elements in the steel sheets, the application of the steel sheets satisfying the required performance is limited. In particular, since recent steel sheets increased in strength are being increased in degree of alloying, the applications of the steel sheets in Patent Literature 1 are extremely limited.

Patent Literature 2 proposes only a method for suppressing LME cracking when the welding current is set to an excessively large value that causes splashes, and no reference is made to LME cracking in a state in which no splashes occur.

Problems with Patent Literature 3 are that many man-hours are required to obtain appropriate welding conditions and that the method cannot be applied to steel sheets and sheet sets for which it is difficult to provide the appropriate current range. Moreover, in Patent Literature 2 and Patent Literature 3, the influence of the inclination angle of the welding electrodes is not studied, and therefore the measures against this influence are insufficient in some cases, in consideration of the actual operation performed during the assembly of automobiles.

In Patent Literature 4, the step of removing the coated layers in advance is necessary, and therefore the production cost is high. Moreover, since the coated layers have been removed, the corrosion resistance of the weld may be low.

The present invention has been made in view of the foregoing circumstances, and it is an object to provide a resistance spot welded member produced in particular using a sheet set including a high strength steel sheet and provide a resistance spot welding method therefor. In the resistance spot welded member, LME cracking can be suppressed irrespective of the sheet set and the chemical compositions of the steel sheets, and the welded member can be produced without removing the coated layer of a galvanized steel sheet included in the sheet set.

Solution to Problem

To achieve the above object, the inventors have conducted extensive studies and obtained the following findings.

The effects of the invention on cracking that occurs during welding cannot be described simply because various influencing factors are involved in a complex manner. However, LME cracking is likely to occur in a resistance spot weld when excessively large tensile residual stress is generated in the weld due to work disturbances etc. during welding. In particular, it is known that, on a steel sheet faying surface at which the steel sheets are in contact with each other, LME cracking is likely to occur in a region in which large local tensile stress is generated when the welding electrodes are released after completion of energization and pressurization for resistance spot welding. Moreover, when the difference in strength between the overlapping steel sheets is significantly large, tensile stress due to the difference in transformation behavior during cooling may easily be generated.

As described above, LME cracking occurs when tensile stress is applied to steel sheets with a liquid metal such as Zn in contact with the steel sheets. Therefore, by facilitating alloying of Fe and Zn in a portion between the steel sheets (between the sheets), the concentration of Fe in a Zn alloy layer remaining between the sheets in the vicinity of the nugget is increased to a certain value or more, so that the liquid Zn is not present between the sheets when tensile stress is applied thereto. The inventors have arrived at the idea that LME cracking can be suppressed by the alloying described above. The inventors have also found welding conditions suitable for increasing the concentration of Fe in the Zn alloy layer remaining between the sheets to a certain value or more.

The present invention has been made based on the above findings, and the summary of the present invention is as follows.

[1] A resistance spot welded member including a plurality of overlapping steel sheets resistance-spot-welded together,

wherein at least one of the plurality of overlapping steel sheets is a galvanized steel sheet having a Zn-based coated layer on a surface thereof,
wherein a concentration of Fe in a Zn alloy layer formed between two steel sheets of the plurality of overlapping steel sheets is denoted as $C_{Fe}$ (mass%),
wherein a distance from an edge of a nugget to a position at which $C_{Fe}$ is measured is denoted as L (pm), and
wherein $C_{Fe}$ and L satisfy relations of the following formulas (1) and (2):

$$C_{Fe} \geq 20, \qquad (1)$$

$$0 < L \leq 500. \qquad (2)$$

[2] The resistance spot welded member according to [1], wherein a concentration of Si in a steel sheet of the plurality of overlapping steel sheets that has a highest Si content is denoted as Csi (mass%), and
wherein Csi satisfies a relation of the following formula (3):

$$C_{Fe} \geq -[L \times (20 + C_{Si} \times 10) / 500] + 40 + C_{Si} \times 10 \qquad (3)$$

wherein $C_{Fe}$ in formula (3) is the concentration of Fe (mass%) in the Zn alloy layer formed between the two steel sheets of the plurality of overlapping steel sheets, and wherein L is the distance (um) from the edge of the nugget to the position at which $C_{Fe}$ is measured.

[3] The resistance spot welded member according to [1] or [2], wherein at least one of the plurality of overlapping steel sheets has a tensile strength of 980 MPa or more.

[4] The resistance spot welded member according to any one of [1] to [3], wherein a tensile strength of a steel sheet of the plurality of overlapping steel sheets that has a highest tensile strength is denoted as TSmax (MPa), wherein a tensile strength of a steel sheet of the plurality of overlapping steel sheets that has a lowest tensile strength is denoted as TSmin (MPa), and
wherein TSmax and TSmin satisfy a relation of the following formula (4):

$$TSmax / TSmin \geq 1.2. \qquad (4)$$

[5] The resistance spot welded member according to any one of [1] to [4], wherein the number of the plurality of overlapping steel sheets is three or more.

[6] A resistance spot welding method for the resistance spot welded member according to any one of [1] to [5], the method including:

a primary energization step of holding the plurality of overlapping steel sheets between a pair of welding electrodes and energizing the steel sheets under application of pressure to join the steel sheets together to thereby form the nugget; and
a secondary energization step of performing post-heat treatment after the formation of the nugget,
wherein an average current value in the primary energization step is denoted as Im (kA), wherein an average current value in the secondary energization step is denoted as Ip(kA), wherein a total energization time in the secondary energization step is denoted as tp (ms), and
wherein Im, Ip, and tp satisfy a relation of the following formula (5):

$$(Ip / Im)^2 \times tp \geq 20 \times C_{Si} + 50 \qquad (5)$$

wherein Csi in formula (5) is a concentration (mass%) of Si in a steel sheet of the plurality of overlapping steel sheets that has a highest Si content.

[7] The resistance spot welding method for the resistance spot welded member according to [6], wherein, in the primary energization step, one or two or more selected from the following states (a) to (e) are satisfied in at least one welding spot immediately before the application of the pressure by the welding electrodes:

(a) a state in which an inclination angle between the welding electrodes and the plurality of overlapping steel sheets is 0.2 degrees or more;
(b) a state in which an amount of offset between the pair of welding electrodes is 0.1 mm or more;
(c) a state in which a gap of 0.5 mm or more is present between one of the welding electrodes and the plurality of overlapping steel sheets;
(d) a state in which a gap of 0.5 mm or more is present between at least one pair of steel sheets of the plurality of overlapping steel sheets; and
(e) a state in which a shortest distance from a center of the welding spot to a steel sheet end face of the plurality of overlapping steel sheets is 10 mm or less.

[8] The resistance spot welding method for the resistance spot welded member according to [6] or [7],

the method further including, between the primary energization step and the secondary energization step, a non-energization step of suspending energization,
wherein the non-energization step and the secondary energization step are repeated two or more times after the primary energization step.

Advantageous Effects of Invention

The present invention can provide a resistance spot welded member produced in particular using a sheet set including a high strength steel sheet and provide a resistance spot welding method therefor. In the resistance spot welded member, LME cracking can be suppressed irrespective of the sheet set and the chemical compositions of the steel sheets, and the welded joint can be produced without removing the coated layer of a galvanized steel sheet included in the sheet set.

Brief Description of Drawings

[Fig. 1] Fig. 1 is a cross-sectional view schematically showing an example of resistance spot welding.
[Fig. 2] Fig. 2 is a cross-sectional view schematically showing a resistance spot weld of a resistance spot welded member according to one embodiment of the invention and the vicinity of the resistance spot weld.
[Fig. 3] Fig. 3 is a cross-sectional view schematically showing a resistance spot weld of a resistance spot welded member according to another embodiment of the invention and the vicinity of the resistance spot weld.
[Fig. 4] Fig. 4 is a cross-sectional view schematically showing a resistance spot weld of a resistance spot welded member according to another embodiment of the invention and the vicinity of the resistance spot weld.
[Fig. 5] Fig. 5 is a graph showing the relation between $C_{Fe}$ and the distance from an edge of a nugget in the resistance spot welded member of the invention when Csi = 1.0 mass%.
[Fig. 6] Fig. 6 is a graph showing the relation between $C_{Fe}$ and the distance from the edge of the nugget in the resistance spot welded member of the invention when Csi = 2.0 mass%.

[Fig. 7] Fig. 7 is a cross-sectional view schematically showing an example of cracks formed during conventional spot welding.

Description of Embodiments

The present invention will next be specifically described. However, the invention is not limited to the following embodiments.

[Resistance spot welded member]

Referring to Figs. 2 to 4, the resistance spot welded member of the invention will be described. Figs. 2 to 4 show thicknesswise cross-sectional views illustrating examples of a resistance spot weld of the resistance spot welded member of the invention and also show partial enlarged views of portions in the vicinity thereof. The enlarged portions are regions surrounded by rectangular frames in Figs. 2 to 4.

The present invention is a resistance spot welded member (hereinafter referred to as a "welded member") having a resistance spot weld including a plurality of overlapping steel sheets resistance-spot-welded together. As described later, at least one of the plurality of overlapping steel sheets is a galvanized steel sheet having a Zn-based coated layer on its steel sheet surface. No particular limitation is imposed on the number of steel sheets so long as two or more steel sheets are used. The number of steel sheets is preferably 3 or more. No particular limitation is imposed on the upper limit of the number of steel sheets, but the number of sheet sheets is preferably 5 or less.

The example shown in Fig. 2 is a welded member 6 formed by welding two overlapping steel sheets. One or both of the steel sheet 2 (lower sheet) disposed on the lower side and the steel sheet 1 (upper sheet) disposed on the upper side are each a galvanized steel sheet. In the welded member in Fig. 2, a resistance spot weld 4 described later is formed at a steel sheet faying surface (faying surface) 7 at which the steel sheets 1 and 2 are in contact with each other.

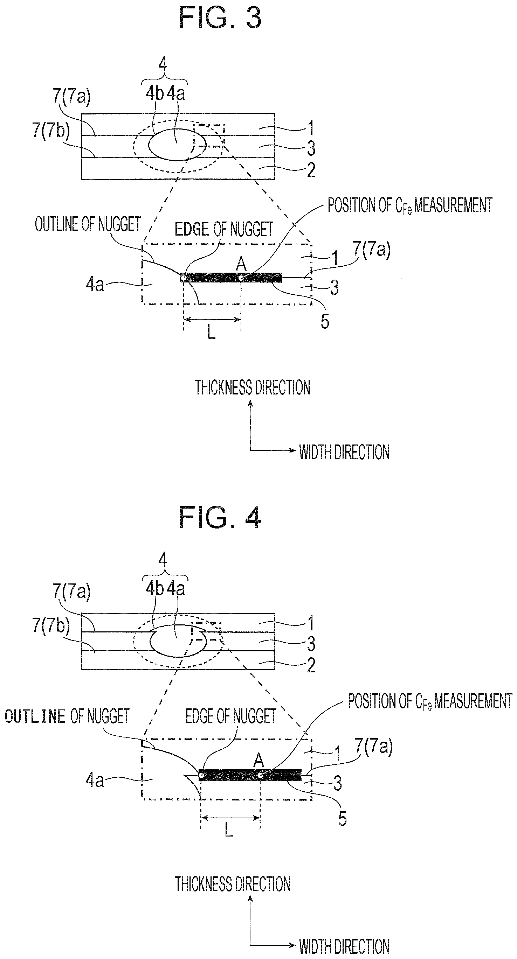

Examples in which the number of steel sheets is 3 or more will be described. Figs. 3 and 4 show welded members 6 each formed by welding three overlapping steel sheets. In the welded members 6 shown in Figs. 3 and 4, at least one or all of the lowermost steel sheet 2 (lower sheet), the uppermost steel sheet 1 (upper sheet), and a steel sheet 3 (middle sheet) disposed therebetween are each a galvanized steel sheet. In each of the welded members in Figs. 3 and 4, a resistance spot weld 4 described later is formed so as to include a faying surface 7 (7a) at which the middle sheet 3 and the upper sheet 1 are in contact with each other and a faying surface 7 (7b) at which the lower sheet 2 and the middle sheet 3 are in contact with each other.

[Resistance spot weld]

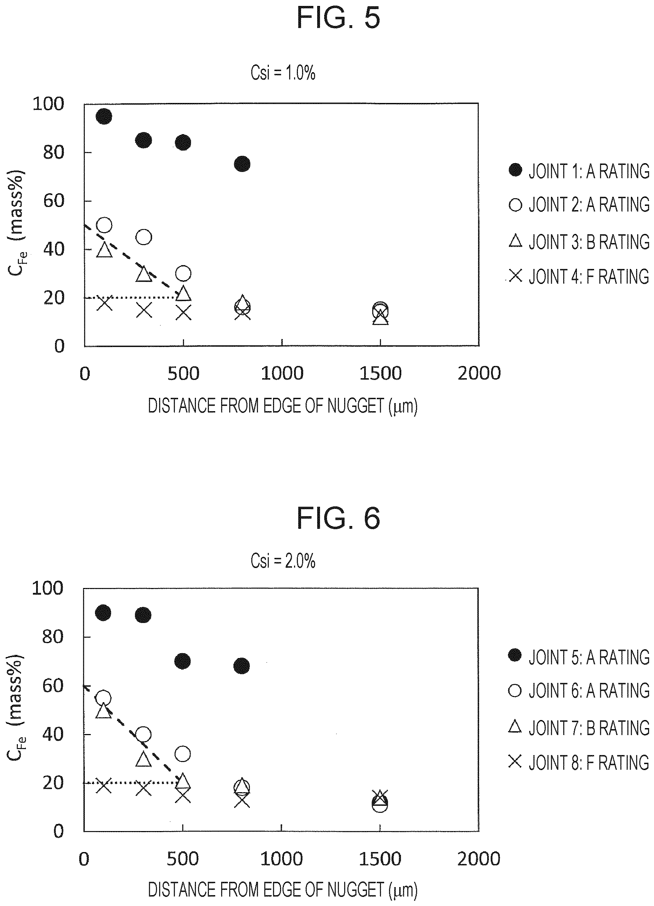

Referring first to Figs. 5 and 6, the technical idea of the invention will be described in detail.

Figs. 5 and 6 show the relation between the concentration of Fe ($C_{Fe}$) in a Zn alloy layer formed between steel sheets in a resistance spot weld (hereinafter referred to as a "weld") in the welded member of the invention and the distance (L) from an edge of the nugget to the point at which the Fe concentration is measured. In Figs. 5 and 6, the vertical axis represents the Fe concentration (mass%), and the horizontal axis represents the distance ($\mu$m) from the edge of the nugget.

In the above examples, welded members (joints 1 to 8) including two or three overlapping steel sheets welded together under various welding conditions were prepared. The concentration of Si in a steel sheet of the plurality of overlapping steel sheets that has the highest Si content is defined as "Csi (mass%)." Two different examples (Csi = 1.0 mass% and Csi = 2.0 mass%) were used to measure $C_{Fe}$ in each joint and the distance L and evaluate LME cracking using methods described later in Examples. Fig. 5 shows the relation when Csi = 1.0 mass%, and Fig. 6 shows the relation when Csi = 2.0 mass%.

As described above, LME cracking occurs when tensile stress is applied to steel sheets with a liquid meal such as Zn in contact with the steel sheets. Therefore, in the present invention, it is important to facilitate alloying of Fe and Zn between sheets to increase the concentration of Fe in the Zn alloy layer remaining between the sheets in the vicinity of the nugget to a certain value or more. This allows no liquid Zn to be present between the sheets when the tensile stress is applied.

As shown in Figs. 5 and 6, in all the joints, as the distance from the edge of the nugget to the point at which the Fe concentration is measured decreases, the Fe concentration increases. This is because the closer to the nugget, the higher the maximum temperature reached during welding, and the further the alloying is facilitated. In joints with significant LME cracking, i.e., joints rated F (joints 4 and 8), the Fe concentration was low in a region in which the distance from the edge of the nugget was 500 um or less. As Csi increases, the threshold value of the Fe concentration necessary for obtaining the A rating increases. The A rating means that LME cracking is completely suppressed. In the region in which the distance from the edge of the nugget is 500 um or less, the maximum temperature reached during welding is particularly high, and Zn is likely to be present as a liquid phase between the sheets when tensile stress is generated after completion of energization. Therefore, when the Fe concentration in the Zn alloy layer formed between the sheets in the region in which the distance from the edge of the nugget is 500 um or less is increased to 20 mass% or more, the melting point of the Zn alloy layer increases, and Zn is unlikely to be present as a liquid phase when tensile stress is generated in the weld. Moreover, as described above, the closer to the nugget, the higher the maximum temperature reached. Therefore, by adjusting $C_{Fe}$ to a certain value or more such that $C_{Fe}$ increases as the distance from the edge of the nugget decreases, the presence of the liquid Zn phase can be reliably prevented when tensile stress is generated. The inventors have thus found that, even when the welded member includes the galvanized steel sheet, LME cracking can be suppressed.

Next, the weld in the welded member of the invention will be described in detail. A weld formed using a sheet set including two overlapping steel sheets is similar to a weld formed using a sheet set including three or more overlapping steel sheets. Therefore, Fig. 2 is used for the following description.

As shown in Fig. 2, the weld 4 has a nugget 4a and a heat-affected zone (HAZ) 4b. A Zn alloy layer 5 is formed between the overlapping steel sheets 1 and 2 (between the sheets) in a region outside the edge of the nugget.

As described above, in the present invention, it is necessary that the concentration of Fe in the Zn alloy layer 5 remaining between the sheets in the vicinity of the nugget 4a be equal to or higher than a certain value. Specifically, the concentration of Fe in the Zn alloy layer 5 formed between the overlapping steel sheets is denoted as $C_{Fe}$ (mass%), and the distance from the edge of the nugget to the position at which $C_{Fe}$ is measured is denoted as L ($\mu$m). Then $C_{Fe}$ and L satisfy the relations of the following formulas (1) and (2).

$$C_{Fe} \geq 20 \qquad (1)$$

$$0 < L \leq 500 \qquad (2)$$

If $C_{Fe}$ is less than 20 (mass%), alloying of Fe-Zn between the sheets is insufficient, and the possibility that liquid Zn is present between the sheets in the vicinity of the nugget is high. When tensile stress caused by the welding pressure from the electrodes, thermal expansion of the steel sheets, shrinkage of the steel sheets, etc. is applied to the weld in the above state, LME cracking is likely to occur. Because of the above reason, $C_{Fe}$ in formula (1) is 20 (mass%) or more. $C_{Fe}$ is preferably 30 (mass%) or more and more preferably 40 (mass%) or more. No particular limitation is imposed on the upper limit of $C_{Fe}$ in formula (1). This is because of the following reason. The larger $C_{Fe}$, the higher the melting point of the Zn alloy layer, and this is effective in suppressing LME cracking. However, to increase $C_{Fe}$ excessively, it is necessary to perform secondary energization treatment for a very long time after the formation of the nugget, and this may cause an increase in takt time. Therefore, $C_{Fe}$ in formula (1) is preferably 98 (mass%) or less and more preferably 95 (mass%) or less.

It is necessary that the distance L measured from the edge of the nugget to the position at which $C_{Fe}$ is measured on the condition that $C_{Fe}$ satisfies the relation of formula (1) be within the range represented by formula (2). The "position at which $C_{Fe}$ is measured" is a position represented by point A in Fig. 2. When the distance L is outside the range represented by formula (2) above, the maximum temperature reached during welding is low, so that LME cracking is unlikely to occur. Specifically, the correlation between $C_{Fe}$ and the occurrence of LME cracking is small.

The positional relation among the edge of the nugget, the position at which $C_{Fe}$ is measured, and the distance L from the edge of the nugget to the position at which $C_{Fe}$ is measured is as shown in Fig. 2. As shown in Fig. 2, the "edge of the nugget" is an intersection of the nugget 4a and the faying surface 7 of the steel sheets 1 and 2. The "position at which $C_{Fe}$ is measured" is a position that is outward of the edge of the nugget and located at the thicknesswise center of the Zn alloy layer 5. In the present invention, "positions at which $C_{Fe}$ is measured (one of them is the point A shown in Fig. 2)" are present on respective outer sides of opposite edges of the nugget 4a. In the present invention the concentration $C_{Fe}$ and the distance L can be measured by methods described later in Examples.

Specifically, a point in the Zn alloy layer that is spaced a certain distance from the edge of the nugget and located at the thicknesswise center is used as a measurement point, and the Fe concentration is measured at the measurement point. The measurement is also performed at positions 1 um above and below the measurement point in the thickness direction, and the average of the three Fe concentration measurements is used as $C_{Fe}$.

For a sheet set including, for example, three overlapping steel sheets, a Zn alloy layer is formed between the upper and middle sheets and between the middle and lower sheets. $C_{Fe}$ between the upper and middle sheets and $C_{Fe}$ between the middle and lower sheets are determined by the method described above, and the minimum value is used as $C_{Fe}$. The same procedure is used when the number of steel sheets is 4 or more.

[Plurality of overlapping steel sheets]

As described above, at least one of the plurality of overlapping steel sheets is a galvanized steel sheet. This is because LME cracking is a phenomenon that occurs when at least one galvanized steel sheet is used. In the plurality of overlapping steel sheets (the sheet set), all the steel sheets may be galvanized steel sheets, or a galvanized steel sheet and a steel sheet having no metal coated layer may be brought to overlap each other. In any case, the effects of the invention are obtained.

The "galvanized steel sheet" in the invention is a steel sheet having a Zn-based coated layer on the surface of a base steel sheet used as the base material. Examples of the Zn-based coated layer include: zinc coatings typified by electrogalvanized coatings and hot-dip galvanized coatings (including hot-dip galvannealed coatings); and zinc alloy coatings containing, in addition to zinc, another element such as aluminum or magnesium. No particular limitation is imposed on the chemical composition of the coated layer. To increase $C_{Fe}$, the concentration of Fe in the coated layer is preferably 5 mass% or more. From the viewpoint of, for example, preventing a reduction in the powdering properties of the steel sheet, the concentration of Fe in the coated layer is preferably 20 mass% or less.

To obtain the above operational effects effectively in the invention, the steel sheets used for the sheet set may have the following optional features.

[Si content in steel sheets]

In the present invention, the concentration of Si in a steel sheet of the plurality of overlapping steel sheets that has the highest Si content is denoted as Csi (mass%). Then it is preferable that the Csi satisfies the relation of the following formula (3). In this case, the effects of the invention can be obtained more effectively.

$$C_{Fe} \geq -[L \times (20 + C_{si} \times 10) / 500] + 40 + C_{si} \times 10 \qquad (3)$$

Here, $C_{Fe}$ in formula (3) is the concentration (mass%) of Fe in the Zn alloy layer formed between the overlapping steel sheets, and L is the distance ($\mu$m) from the edge of the nugget to the position at which $C_{Fe}$ is measured.

Various factors influence LME cracking. As for the chemical composition of the steel sheets, as the amount of Si increases, the risk of the occurrence of LME cracking may increase. The influence of Si in the steel sheets on LME cracking is complicated and cannot be simply explained. However, Si is known to be an element that inhibits an alloying reaction of Fe-Zn. Therefore, since liquid Zn is more likely to be present between the sheets as the amount of Si increases, it is preferable to increase the lower limit of $C_{Fe}$ as the Si content in the steel sheets increases. As the distance from the nugget decreases, the maximum temperature reached during welding increases, so that liquid Zn is more likely to be present between the sheets. It is therefore preferable to increase the lower limit of $C_{Fe}$ as the distance L decreases.

Because of the reasons described above, it is preferable that the Si concentration (Csi) in the steel sheet in the sheet set that has the highest Si content, the Fe concentration ($C_{Fe}$) in the Zn alloy layer, and the distance L satisfy the relation of formula (3). The larger $C_{Fe}$, the higher the melting point of the Zn alloy layer, and this is effective in suppressing LME cracking. Therefore, because of the same reasons as described for formula (1) above, the upper limit of formula (3) is not particularly specified. However, to increase $C_{Fe}$ excessively, it is necessary to perform secondary energization treatment for a very long time after the formation of the nugget, and this may cause an increase in takt time. Therefore, $C_{Fe}$ in formula (3) is preferably 98 (mass%) or less and more preferably 95 (mass%) or less.

For a sheet set susceptible to LME cracking or in the presence of work disturbances, it is more preferable that the relation among Csi, $C_{Fe}$, and L satisfies the following relational expression.

$$C_{Fe} \geq -[L \times (20 + C_{si} \times 10) / 500] + 60 + C_{si} \times 10$$

In the present invention, the concentration Csi can be measured using a method described later in Examples.

[Tensile strength of steel sheet]

LME cracking is more likely to occur in a high strength steel sheet. Therefore, in the present invention, it is preferable that the tensile strength of at least one of the plurality of overlapping steel sheets is 980 MPa or more. In this case, even when the strength of the steel sheet is high, the occurrence of LME cracking can be suppressed, and therefore the effect of improving the crash properties of the welded member can be expected to be obtained, so that the effects of the invention can be obtained more effectively. The tensile strength of the steel sheet is preferably 3000 MPa or less.

[Difference in strength between steel sheets]

As described above, when the difference in strength between the plurality of overlapping steel sheets is significantly large, LME cracking is likely to occur because of tensile stress caused by the difference in transformation behavior during cooling after welding. Therefore, in the present invention, the tensile strength of a steel sheet of the plurality of overlapping steel sheets that has the largest tensile strength is denoted as TSmax (MPa), and the tensile strength of a steel sheet having the smallest tensile strength is denoted as TSmin (MPa). Then it is preferable that TSmax and TSmin satisfy the relation of the following formula (4). In this case, LME cracking can be suppressed even in a sheet set susceptible to LME cracking, and the flexibility in the structural design of automobiles is improved, so that the effects of the invention can be obtained more effectively.

$$\text{TSmax / TSmin} \geq 1.2 \qquad (4)$$

It is more preferable that the relation TSmax / TSmin $\geq$ 1.5 is satisfied. The upper limit of formula (4) is not particularly specified. From the viewpoint of a practical strength level of steel sheets for automobile, it is preferable that the value of (TSmax / TSmin) is 12.0 or less.

As the number of overlapping steel sheets increases, the heat input to the weld increases, so that LME cracking is more likely to occur. Therefore, when the number of overlapping steel sheets is three or more, the effects of the invention can be obtained more effectively.

Figs. 3 and 4 show examples in which the number of overlapping steel sheets is three. In the example shown in Fig. 3, the lower sheet 2 and the middle sheet 3 are steel sheets with no coating, and the upper sheet 1 is a coated steel sheet. In the example in Fig. 3, no Zn coating is present between the middle sheet 3 and the lower sheet 2, but the Zn alloy layer 5 with the above-described $C_{Fe}$ is formed between the upper sheet 1 and the middle sheet 3.

In the example shown in Fig. 4, the melting point of the upper sheet 1 is lower than those of the middle sheet 3 and the lower sheet 2. When the steel sheets have different melting points, the outline of the nugget 4a is not elliptical in some cases. In these cases, as shown in Fig. 4, the distance L is measured such that one of the intersections of the outlines of the nugget 4a and the interfaces between the sheets that is farthest from the center of the weld in the width direction is used as the edge of the nugget. The same applies to a sheet set including two overlapping sheets.

No particular limitation is imposed on the chemical composition of the high strength steel sheet used in the invention so long as the steel sheet has the features described above. From the viewpoint of applying the invention to structural parts of automobiles, it is preferable that the high strength steel sheet has the following chemical composition. In the following description, "%" in the chemical composition means "% by mass" unless otherwise specified.

C: 0.1 to 0.4%

C is an element that contributes to an increase in the strength of the steel sheet. Therefore, the content of C is preferably 0.1% or more. The content of C is more preferably 0.12% or more. If an excessively large amount of C is added, the weld is hardened excessively, and this causes a reduction in toughness of the weld. Therefore, the content of C is preferably 0.4% or less. The content of C is more preferably 0.38% or less.

Si: 0.02 to 2.5%

Si is an element effective in improving the strength and elongation of the steel sheet. Therefore, the content of Si is preferably 0.02% or more. The content of Si is more preferably 0.1% or more. If an excessively large amount of Si is added, a reduction in LME resistance and a reduction in coatability occur. Therefore, the content of Si is preferably 2.5% or less. The content of Si is more preferably 2.0% or less.

Mn: 1.0 to 5.0%

Mn is an element that contributes to an increase in the strength of the steel sheet. Therefore, the content of Mn is preferably 1.0% or more. The content of Mn is more preferably 1.2% or more. If an excessively large amount of Mn is added, solidification segregation of alloy elements in the nugget is facilitated, and this causes a reduction in the toughness of the weld. Therefore, the content of Mn is preferably 5.0% or less. The content of Mn is more preferably less than 3.5%.

P: 0.05% or less

If an excessively large amount of P is added, solidification segregation in the nugget causes a reduction in the toughness of the weld. Therefore, the content of P is preferably 0.05% or less. The content of P is more preferably 0.02% or less. The lower limit of the content of P is not particularly specified. However, an excessive reduction in the amount of P causes an increase in steel making cost. Therefore, the content of P is preferably 0.005% or more.

S: 0.01% or less

If the content of S is large, solidification segregation in the nugget causes a reduction in the toughness of the weld. Therefore, the content of S is preferably 0.01% or less. The content of S is more preferably 0.005% or less. The lower limit of the content of S is not particularly specified. However, an excessive reduction in the amount of S causes an increase in steel making cost. Therefore, the content of S is preferably 0.0002% or more.

Al: 0.01 to 1.00%

Al is an element necessary for deoxidization. To obtain this effect, it is desirable that Al is contained in an amount of 0.01% or more. However, if an excessively large amount of Al is added, the amount of inclusions in the steel sheet increases, and this causes a reduction in local deformability, so that the ductility of the steel sheet decreases. Therefore, the upper limit of the content of Al is preferably 1.00%. The content of Al is more preferably 0.80% or less.

N: 0.01% or less

N forms coarse nitrides, and this causes a reduction in local deformability, so that the ductility of the steel sheet decreases. It is therefore desirable to reduce the content of N. When the content of N is 0.01% or more, the above tendency is significant. Therefore, the content of N is preferably less than 0.01%. The content of N is more preferably 0.0075% or less. The lower limit of the content of N is not particularly specified. However, an excessive reduction in the amount of N causes an increase in steel making cost. Therefore, the content of N is preferably 0.0001% or more.

The balance is Fe and incidental impurities. Examples of the incidental impurities include Co, Sn, and Zn. The allowable ranges of the contents of these elements are Co: 0.05% or less, Sn: 0.01% or less, and Zn: 0.01% or less. In the present invention, even when Ta, Mg, and Zr are contained within the ranges for the chemical composition of ordinary steel, the effects of the invention are not lost.

In the present invention, one or two or more of the following components may be contained in addition to the above-described components. The contents of these components may be 0%.

Nb: 0.1% or less

Nb forms fine carbonitrides and is effective for precipitation hardening of the steel sheet. To obtain this effect, it is preferable that Nb is contained in an amount of 0.005% or more. However, if a large amount of Nb is added, not only does the elongation decrease significantly, but also slab cracking will occur after continuous casting. Therefore, the content of Nb is preferably 0.1% or less. The content of Nb is more preferably 0.07% or less and still more preferably 0.055% or less.

Ti: 0.1% or less

Ti forms fine carbonitrides and is effective for precipitation hardening of the steel sheet. To obtain this effect, it is preferable that Ti is contained in an amount of 0.005% or more. However, if a large amount of Ti is added, the elongation deceases significantly. Therefore, the content of Ti is preferably 0.1% or less. The content of Ti is more preferably 0.065% or less.

V: 0.05% or less

V forms fine carbonitrides and is effective for precipitation hardening of the steel sheet. To obtain this effect, it is preferable that V is contained in an amount of 0.005% or more. Even if a large amount of V is added, the strength increasing effect obtained by the excess amount of V over 0.05% is small. Moreover, this leads to an increase in the cost of alloying. Therefore, the content of V is preferably 0.05% or less.

Cr: 1.0% or less

Cr is an element that facilitates the formation of martensite in the resistance spot weld and therefore contributes to an increase in the shear tensile strength. To obtain this effect, it is preferable that Cr is added in an amount of 0.05% or more. However, if the content of Cr exceeds 1.0%, surface defects tend to be formed. Therefore, the content of Cr is preferably 1.0% or less. The content of Cr is preferably 0.8% or less.

Mo: 0.5% or less

Like Cr, Mo is an element that facilitates the formation of martensite in the resistance spot weld and therefore contributes to an increase in the shear tensile strength. To obtain these effects, it is desirable that Mo is contained in an amount of 0.01% or more. The content of Mo is preferably 0.02% or more. Even if the content of Mo exceeds 0.5%, the above-described effects are saturated, and this only leads to an increase in cost. Therefore, the content of Mo is preferably 0.5% or less. The content of Mo is more preferably 0.42% or less.

Cu: 1.0% or less

Cu is an element that contributes to solid solution strengthening of the steel sheet. To obtain this effect, it is preferable that Cu is contained in an amount of 0.005% or more. However, if the content of Cu exceeds 1.0%, the effect is saturated, and surface defects due to Cu tend to be formed. Therefore, the content of Cu is preferably 1.0% or less.

Ni: 0.50% or less

Ni is an element that contributes to an increase in the strength of the steel sheet through solid solution strengthening and transformation strengthening. To obtain this effect, it is preferable that Ni is contained in an amount of 0.005% or more. When Ni is added in combination with Cu, the effect of reducing surface defects caused by Cu is obtained, and therefore Ni is effective when Cu is added. However, even when Ni is added in an amount of more than 0.50%, the effect of Ni is saturated. Therefore, the content of Ni is preferably 0.50% or less.

B: 0.010% or less

B is an element that improves the hardenability of the steel sheet and contributes to an increase in the strength. To obtain these effects, it is preferable that B is contained in an amount of 0.0002% or more. However, if B is contained in an amount of more than 0.010%, these effects are saturated. Therefore, the content of B is preferably 0.010% or less. The content of B is preferably 0.008% or less.

Sb: 0.20% or less

Sb has the effect of suppressing the formation of a decarburized layer in the surface layer of the steel sheet and can therefore suppress a reduction in the amount of martensite at the surface of the steel sheet. To obtain this effect, the content of Sb is preferably 0.001% or more. If Sb is added in an amount of more than 0.20%, a rolling load increases, and the productivity decreases. Therefore, the content of Sb is preferably 0.20% or less.

Ca and/or REMs: 0.02% or less

Ca and REMs (rare earth metals) are elements that spheroidize sulfides and thereby contribute to an improvement in the delayed fracture resistance and may be added as needed. To obtain these effects, it is preferable that Ca and REMs are each contained in an amount of 0.0005% or more. However, if their contents exceed 0.02%, their effects are saturated. Therefore, their contents are each preferably 0.02% or less.

[Resistance spot welding method]

Next, an embodiment of a resistance spot welding method for producing the welded member of the invention will be described.

The welded member of the invention is produced by resistance spot welding that includes holding, between a pair of welding electrodes, a sheet set including a plurality of overlapping steel sheets including at least one galvanized steel sheet described above and energizing the sheet set under application of pressure to thereby join the steel sheets.

For example, as shown in Fig. 1, two steel sheets 1 and 2 are brought to overlap with each other to form a sheet set. Then the sheet set is held between a pair of welding electrodes 8 and 9 disposed on the lower and upper sides of the sheet set and then energized under the application of pressure while the welding conditions are controlled to prescribed conditions. In this manner, the weld 4 described above is formed between the steel sheets 1 and 2 at the faying surface 7 of the steel sheets, and the steel sheets can thereby be joined together. A steel sheet having a Zn-based coated layer (a GI or GA steel sheet) and a steel sheet having no coated layer (a high strength cold rolled steel sheet) may be used to form a sheet set. In this case, the steel sheets are brough to overlap each other such that the Zn-based coated layer side of the GI or GA steel sheet is in contact with the high strength cold rolled steel sheet.

A welder usable in the resistance spot welding method of the present invention may be a welder that includes a pair of upper and lower electrodes and can perform welding while the welding pressure and the welding current are controlled freely. No particular limitation is imposed on the pressurizing mechanism (such as an air cylinder or a servo motor) of the welder, its type (e.g., a stationary or robot gun type), and the shape of the welding electrodes. Examples of the type of welding electrode tip include a DR type (dome radius type), an R type (radius type), and a D type (dome type) specified in JIS C 9304: 1999. The tip diameter of the welding electrodes is, for example, 4 mm to 16 mm, and the radius of curvature of the tips of the welding electrodes is, for example, 10 mm to 400 mm. The present invention can be applied to both DC and AC. When AC is used, the "current" means the "effective current."

Next, the welding conditions in the invention will be described. An effective way to facilitate the alloying of Fe-Zn between the sheets in the vicinity of the nugget is to perform post-heat treatment to keep the weld appropriately at high temperature after the formation of the nugget until the welding electrodes are released.

Therefore, the resistance spot welding in the invention includes a primary energization step of forming the nugget and a secondary energization step of performing post-heat treatment after the formation of the nugget. The average current value in the primary energization step is denoted as Im (kA), and the average current vale in the secondary energization step is denoted as Ip (kA). The total energization time in the secondary energization step is denoted as tp (ms). Then it is important that Im, Ip, and tp satisfy the relation of the following formula (5).

$$(Ip \ / \ Im)^2 \ \times \ tp \ \geq \ 20 \ \times \ C_{Si} \ + \ 50 \qquad (5)$$

Csi in formula (5) is the concentration (mass%) of Si in a steel sheet of the plurality of overlapping steel sheets that has the highest Si content.

If the value of $((Ip \ / \ Im)^2 \times tp)$ is lower than the lower limit (the value on the right-hand side of formula (5) above), the amount of heat generated in the secondary energization step is insufficient, and the alloying of Fe-Zn in the Zn alloy layer between the sheets is insufficient, so that $C_{Fe}$ cannot be increased. Moreover, as described above, as the content of Si in the steel sheet increases, LME cracking is more likely to occur. Accordingly, the inventors have arrived at the idea that increasing the lower limit of $((Ip \ / \ Im)^2 \times tp)$ according to Csi is effective.

Because of the reasons described above, the welding conditions are controlled such that the current values and the energization time (Im, Ip, and tp) in the primary energization step and the secondary energization step and the content of Si (Csi) in the steel sheet satisfy the relation of formula (5).

In a sheet set susceptible to LME cracking or in the presence of work disturbances, it is preferable that Im, Ip, tp, and Csi satisfy the following relational expression.

$$(Ip \ / \ Im)^2 \ \times \ tp \ \geq \ 20 \ \times \ C_{Si} \ + \ 100$$

The larger the heat input in the secondary energization step, the further the alloying in the Zn alloy layer between the sheets is facilitated. This is effective in increasing $C_{Fe}$, and therefore the upper limit of $((Ip \ / \ Im)^2 \times tp)$ is not particularly specified. However, to prevent the occurrence of significant splashes due to excessively large heat input and to prevent an excessive increase in the takt time in an automobile production process, it is preferable that the value of $((Ip \ / \ Im)^2 \times tp)$ in formula (5) is equal to or less than $(300 \times C_{Si} + 3700)$.

If the current value in the secondary energization step is excessively large, not only does the risk of the occurrence of splashes due to re-melting of the nugget increase, but also the risk of the occurrence of LME cracking due to excessively large heat input increases. Therefore, it is more preferable that the current values in the primary energization step and the secondary energization step satisfy the relation Ip / Im ≤ 2.0 in addition to the welding conditions described above.

When the value of (Ip / Im) is 2.0 or less, re-melting and growth of the nugget in the secondary energization step can be suppressed, and the occurrence of splashes can be prevented. The value of (Ip / Im) is preferably 1.8 or less. The value of (Ip / Im) is preferably 0.5 or more, more preferably 0.9 or more, and still more preferably 1.0 or more.

The total energization time in the secondary energization step is preferably 50 to 1000 ms in order to prevent an excessive increase in the takt time in an automobile production process while the heat input obtained is maintained at a certain value or more.

The holding time after the secondary energization step is set to 20 to 1000 ms. In this case, the occurrence of blow holes in the nugget and an excessive increase in the takt time can be prevented.

In the present invention, welding conditions described below may be imposed in addition to the welding conditions in the above steps.

As described above, LME cracking is likely to occur in the presence of work disturbances during welding. Therefore, in the primary energization step, it is preferable that one or two or more selected from the following states (a) to (e) are satisfied in at least one welding spot immediately before the application of the pressure by the welding electrodes. In this manner, the effects of the invention can be obtained more effectively.

(a) A state in which the inclination angle between the welding electrodes and the plurality of overlapping steel sheets is 0.2 degrees or more.
(b) A state in which the amount of offset between the pair of welding electrodes is 0.1 mm or more.
(c) A state in which a gap of 0.5 mm or more is present between one of the welding electrodes and the plurality of overlapping steel sheets.
(d) A state in which a gap of 0.5 mm or more is present between at least one pair of steel sheets of the plurality of overlapping steel sheets.
(e) A state in which the shortest distance from the center of the welding spot to a steel sheet end face of the plurality of overlapping steel sheets is 10 mm or less.

These welding work disturbances each cause the temperature of the weld and/or the tensile stress when the electrodes are released to increase locally. In the resulting state, LME cracking is more likely to occur. However, in the present invention, $C_{Fe}$ is adjusted appropriately. Therefore, even in the presence of these welding work disturbances, LME cracking can be suppressed, and tolerances for work disturbance management during the production of the member are improved. The details of the work disturbances will next be described.

(a) The state in which the inclination angle between the welding electrodes and the plurality of overlapping steel sheets is 0.2 degrees or more.
The inclination angle means the angle of inclination of the electrodes with respect to the steel sheets, i.e., the "angle between the direction of the welding pressure from the electrodes and the thickness direction of the steel sheets." When the inclination angle is large, bending stress is applied to the weld, and large compression plastic deformation occurs locally, so that tensile stress after cooling increases. The effects of the invention can be obtained effectively when the inclination angle is 0.2 degrees or more. If the inclination angle is excessively large, the formation of the nugget is unstable, and this causes splashes to occur. Therefore, the inclination angle is preferably 10 degrees or less. The inclination angle is more preferably 1 degree or more and is more preferably 8 degrees or less.
(b) The state in which the amount of offset between the pair of welding electrodes is 0.1 mm or more.
The offset means the state in which the center axes of the pair of welding electrodes are not aligned with each other. If the offset amount is large, bending stress is applied to the weld, and LME cracking is more likely to occur, as in the case of the inclination angle described above. The effects of the invention can be obtained effectively when the offset amount is 0.1 mm or more. If the offset amount is excessively large, the formation of the nugget is unstable, and this causes splashes to occur. Therefore, the offset amount is preferably 5 mm or less. The offset amount is more preferably 0.2 mm or more and is more preferably 3 mm or less.
(c) The state in which a gap of 0.5 mm or more is present between one of the welding electrodes and the plurality of overlapping steel sheets.
When a gap is present between one of the welding electrodes and the steel sheets immediately before the start of the application of pressure, e.g., when one of the electrodes is movable (hereinafter referred to as a movable electrode) and the other electrode is fixed (hereinafter referred to as a fixed electrode) with a gap present between the fixed electrode and the steel sheets, the steel sheets are bent when the application of pressure by the movable electrode is started, and therefore bending stress is applied to the weld. In this case, LME cracking is likely to occur. The effects of the invention can be obtained effectively when the gap width between this welding electrode and the steel sheets is 0.5 mm or more. If the gap width is excessively large, the formation of the nugget is unstable, and this causes splashes to occur. Therefore, the gap width is preferably 5 mm or less. The gap width is more preferably 1 mm or more and is more preferably 3 mm or less.
(d) The state in which a gap of 0.5 mm or more is present between at least one pair of steel sheets of the plurality of overlapping steel sheets.

When a gap is present between steel sheets immediately before the application of the pressure, bending deformation occurs in the steel sheets, and bending stress is applied to the weld, so that LME cracking is more likely to occur, as in the case of (c). The effects of the invention can be obtained effectively when the gap width is 0.5 mm or more. If the gap width is excessively large, the formation of the nugget is unstable, and this causes splashes to occur. Therefore, the gap width is preferably 4 mm or less. The gap width is more preferably 1 mm or more and is more preferably 3 mm or less.

The phrase "a gap is present between at least one pair of steel sheets" means as follows. In two or more overlapping steel sheets, two steel sheets disposed in the vertical direction are defined as a pair of steel sheets. The above phrase means that a gap is present between at least one pair of steel sheets.

(e) The state in which the shortest distance from the center of the welding spot to the steel sheet end face of the plurality of overlapping steel sheets is 10 mm or less.

If the shortest distance from the center of the welding spot to the steel sheet end face is large, the cooling rate of the weld may decrease excessively because heat conduction from the weld is inhibited at the steel sheet end face. In this case, the temperature when the electrodes are released increases, and LME cracking is more likely to occur. The effects of the invention can be obtained effectively when the shortest distance from the center of the welding spot to the steel sheet end face is 10 mm or less. If the shortest distance is less than 3 mm, the occurrence of splashes during welding is significant. In this case, variations in nugget diameter tend to be large, and the strength of the welds is unstable. Therefore, the shortest distance is preferably 3 mm or more. The shortest distance is more preferably 4 mm or more and is more preferably 8 mm or less.

[Non-energization step]

In the present invention, it is preferable that a non-energization step in which the energization is suspended is provided between the primary energization step and the secondary energization step and that the non-energization step and the secondary energization step are repeated at least twice after the primary energization step. In this manner, the effects of the invention can be obtained more effectively.

An effective way to facilitate the alloying of Fe-Zn to increase $C_{Fe}$ is to keep a region in the vicinity of the nugget within a certain temperature range after completion of the primary energization step. In this case, if the temperature after the secondary energization is excessively high, it is feared that the amount of splashes may increase due to re-melting of the nugget. If the temperature after the secondary energization is excessively low, the desired heat treatment effects are not obtained. If the non-energization step is not provided and the secondary energization is performed at a constant current value, the temperature of the region in the vicinity of the nugget increases gradually when the current value is large, and the temperature of the region in the vicinity of the nugget decreases gradually when the current value is small. The desired effects may also be obtained even in these states by appropriately set the current value. However, the man-hours required to derive optimal conditions may be large. For this reason, in the present invention, it is preferable that the non-energization step is provided between the primary energization step and the secondary energization step. In this manner, the region in the vicinity of the nugget can be kept within a certain temperature range. The non-energization time in the non-energization step is preferably 10 to 350 ms. When the non-energization time is repeated, the total non-energization time is preferably 2000 ms or shorter, from the viewpoint of preventing an increase in takt time.

To keep the nugget within a certain temperature range, it is necessary to control the conditions strictly. Moreover, it is difficult to manage the conditions when the welding work disturbances described above are present. By repeating the non-energization step and the secondary energization step, the temperature of the region in the vicinity of the nugget is kept within a relatively constant range even when the total energization time in the secondary energization step is long. In this case, the appropriate current range in the secondary energization step is broadened, and the robustness against the welding work disturbances is improved.

Therefore, the number of repetitions of the non-energization step and the secondary energization step is preferably 2 or more and more preferably 4 or more. The upper limit of the number of repetitions is not particularly specified. Generally, there is an upper limit to the number of repetitions that can be set in a welder. To set the number of repetitions above the upper limit, the welder must be modified. Therefore, for the reason that the equipment cost in the automobile production process increases, the number of repetitions is preferably 20 or less and more preferably 10 or less.

In the present invention, no particular limitation is imposed on the pressurizing condition in each step. From the viewpoint of automobile applications, it is preferable to control the pressurizing condition within the range of 2.0 to 8.0 kN.

EXAMPLES

Examples of the invention will next be described. However, the invention is not limited to the following Examples.

Welded joints (welded members) were produced using sheet sets shown in Table 1 under welding conditions shown in Table 2. The welder used was a servo motor pressing-type single-phase AC (50 Hz) resistance welder attached to a welding gun. The pair of electrode tips used were chromiumcopper DR-type electrodes having a tip curvature radius R of 40 mm and a tip diameter of 6 mm.

In each sheet set, a steel sheet 1, a steel sheet 2, and a steel sheet 3 shown in Table 1 were disposed in this order from the upper side so as to overlap each other. "GA" in each coating column in Table 1 means a steel sheet having a hot-dip galvannealed layer, and "GI" means a steel sheet having a hot-dip galvanized layer. "EG" means a steel sheet having an electrogalvanized layer, and "None" means a steel sheet having no coated layer (a cold rolled steel sheet).

Symbols in the "work disturbance" column in Table 2 correspond to (a) to (e) shown for the welding work disturbances described above. "tp (ms)" in the welding conditions in Table 2 is the total energization time in the secondary energization step, and "-" shown for the non-energization step means that the non-energization step is not included.

"Number of repetitions of non-energization step and secondary energization step" in the welding conditions in Table 2 is the number of repetitions of the non-energization step and the secondary energization step after the primary energization step when the non-energization step is included. For example, when "the primary energization step and the secondary energization step" are performed, the number of repetitions is "0." When "the primary energization step, the non-energization step, and the secondary energization step" are performed, the number of repetitions is "1." For example, when the number of repetitions is "3," "the primary energization step, the non-energization step (1), the secondary energization step (1), the non-energization step (2), the secondary energization step (2), the non-energization step (3), and the secondary energization step (3)" are performed.

In the "Si content" columns in Table 1, the concentrations of Si in the steel sheets are shown. In the "Mn content" columns, the concentrations of Mn in the steel sheets are shown. In the "Csi" columns in Tables 1 and 2, the concentrations of Si in steel sheets in sheet sets that have the highest Si content are shown. In the Examples, "Csi" was measured by an inductively coupled plasma (ICP) emission spectroscopic analysis method.

In each "Tensile strength" column in Table 1, the tensile strength (MPa) measured as follows is shown. A JIS No. 5 test piece for a tensile test was cut from one of the steel sheets in the rolling direction, and the tensile test was performed according to JIS Z 2241 to measure the tensile strength. In the "TSmax" columns in Tables 1 and 2, the largest one of the tensile strengths of the steel sheets in a sheet set measured in the tensile test described above is shown. In the "TSmin" columns, the smallest one of the tensile strengths of the steel sheets in a sheet set measured in the tensile test is shown.

Each of the welded members obtained was used to evaluate LME cracking in the weld and measure the Fe concentration ($C_{Fe}$) in the Zn alloy layer and the distance L from the edge of the nugget to the position at which $C_{Fe}$ was measured using methods described below.

<Evaluation of LME cracking>

The weld of the welded member was cut at the center using a micro-cutter, and the cross-section was observed to evaluate the presence or absence of LME cracking. Specifically, 10 welded members were produced under welding conditions shown in Table 2, and LME cracking between sheets was checked and evaluated according to the following criteria. The evaluation results are shown in Table 2.

A: No cracking was found in all the ten welded members.
B: The number of cracked joints was 2 or less, and the maximum cracking depth was less than 100 $\mu$m.
F: The number of cracked joints was 3 or more, or the maximum cracking depth was 100 um or more.

Here, when the evaluation rating was "A" or "B," the welded member was rated pass.

<Measurement of $C_{Fe}$ and distance L>

When the cross section was observed, not only was the LME cracking checked, but also the concentration of Fe in the Zn alloy layer between sheets in the vicinity of the nugget was measured at a given point using an energy dispersive X-ray (EDX) analyzer to compute $C_{Fe}$. Specifically, the thicknesswise center of the Zn alloy layer at a position spaced a certain distance from the edge of the nugget was used as the measurement point, and the Fe concentration at the measurement point was measured. Moreover, the measurement was performed at positions 1 um below and above the measurement point in the thickness direction, and the average of the three Fe concentration measurements was used as $C_{Fe}$. The position for $C_{Fe}$ is formed on both sides of the nugget, but $C_{Fe}$ was measured on one side.

The distance from the edge of the nugget to the point at which $C_{Fe}$ was measured was measured under a scanning electron microscope (SEM).

For sheet sets including three overlapping steel sheets (sheet sets No. b to No. j), a Zn alloy layer was formed between the steel sheet 1 and the steel sheet 2 and between the steel sheet 2 and the steel sheet 3. For these sheet sets, $C_{Fe}$ was measured between the steel sheet 1 and the steel sheet 2 and between the steel sheet 2 and the steel sheet 3, and the minimum value of the measurements was used for the computation in each formula.

The measurement results are shown in Table 2.

[Table 1]

| Sheet set No. | Steel sheet 1 | | | | | Steel sheet 2 | | | | | Steel sheet 3 | | | | | C_Si (mass%) | TSmax (MPa) | TSmin (MPa) |
|---|---|---|---|---|---|---|---|---|---|---|---|---|---|---|---|---|---|---|
| | Tensile strength (MPa) | Thickness (mm) | Mn content (mass%) | Si content (mass%) | Coating | Tensile strength (MPa) | Thickness (mm) | Mn content (mass%) | Si content (mass%) | Coating | Tensile strength (MPa) | Thickness (mm) | Mn content (mass%) | Si content (mass%) | Coating | | | |
| a | 990 | 1.6 | 2.5 | 1.5 | GA | 990 | 1.6 | 2.5 | 1.5 | GA | | | | | | 1.5 | 990 | 990 |
| b | 279 | 0.7 | 0.12 | 0.01 | GA | 1502 | 1.2 | 3.0 | 1.2 | GA | 991 | 1.4 | 3.4 | 0.5 | GA | 1.2 | 1502 | 279 |
| c | 992 | 1.6 | 2.0 | 1.4 | GA | 270 | 1.0 | 0.12 | 0.01 | GA | 1203 | 1.4 | 2.5 | 1.2 | GA | 1.4 | 1203 | 270 |
| d | 995 | 1.4 | 1.8 | 0.5 | None | 275 | 0.7 | 0.12 | 0.01 | GA | 995 | 1.4 | 2.1 | 0.5 | GA | 0.5 | 995 | 275 |
| e | 780 | 1.6 | 2.0 | 1.0 | GA | 270 | 0.6 | 0.17 | 0.008 | GA | 590 | 1.8 | 1.5 | 1.0 | None | 1.0 | 780 | 270 |
| f | 1020 | 1.6 | 2.2 | 1.5 | None | 270 | 1.2 | 0.17 | 0.008 | GA | 440 | 1.2 | 2.2 | 1.0 | None | 1.5 | 1020 | 270 |
| g | 279 | 0.7 | 0.12 | 0.01 | GA | 1502 | 1.2 | 3.0 | 1.2 | GI | 991 | 1.4 | 3.4 | 0.5 | GI | 1.2 | 1502 | 279 |
| h | 279 | 0.7 | 0.12 | 0.01 | GA | 1502 | 1.2 | 3.0 | 1.2 | EG | 991 | 1.4 | 3.4 | 0.5 | EG | 1.2 | 1502 | 279 |
| i | 279 | 0.7 | 0.12 | 0.01 | GA | 1870 | 1.6 | 1.0 | 0.2 | None | 995 | 1.4 | 2.1 | 0.5 | GA | 0.5 | 1870 | 279 |
| j | 279 | 0.7 | 0.12 | 0.01 | GA | 2010 | 1.4 | 1.0 | 0.2 | None | 995 | 1.4 | 2.1 | 1.0 | GA | 1.0 | 2010 | 279 |
| k | 990 | 1.6 | 2.5 | 1.5 | GA | 1870 | 1.6 | 1.0 | 0.2 | None | | | | | | 1.5 | 1870 | 990 |
| l | 990 | 1.6 | 2.5 | 1.5 | GA | 2010 | 1.4 | 1.0 | 0.2 | None | | | | | | 1.5 | 2010 | 990 |

\* GA: Hot-dip galvannealed steel sheet
\* GI: Hot-dip galvanized steel sheet
\* EG: Electrogalvanized steel sheet

[Table 2]

| No. | Sheet set No. | $C_{Si}$ (mass%) | TSmax (MPa) | TSmin (MPa) | Welding conditions | | | | | | | | | | Im (kA) | Ip (kA) | tp (ms) | $C_{Fe}$ (mass%) | L (μm) | Right side of formula (3) | Left side of formula (4) | Left side of formula (5) | Right side of formula (5) | Cracking evaluation | Remarks |
|---|---|---|---|---|---|---|---|---|---|---|---|---|---|---|---|---|---|---|---|---|---|---|---|---|---|
| | | | | | Welding pressure (kN) | Primary energization step | | Non-energization step | Secondary energization step | | Number of repetitions of non-energization step and secondary energization step | Holding time (ms) | Work disturbance | | | | | | | | | | | | |
| | | | | | | Current value Im (kA) | Energization time (ms) | Non-energization time (ms) | Current value Ip (kA) | Energization time (ms) | | | | | | | | | | | | | | | |
| 1 | a | 1.5 | 990 | 990 | 3.0 | 7.0 | 300 | 160 | 10.0 | 50 | 2 | 300 | (a) Inclination angle: 5 degrees | 7.0 | 10.0 | 100 | 85.2 | 200 | 41.0 | 1.0 | 204 | 80 | A | Inventive Example |
| 2 | b | 1.2 | 1502 | 279 | 5.0 | 8.0 | 420 | 100 | 8.2 | 70 | 6 | 200 | (a),(d) Inclination angle: 6 degrees Gap between sheets: 1 mm | 8.0 | 8.2 | 420 | 82.0 | 400 | 26.4 | 5.4 | 441 | 74 | A | Inventive Example |
| 3 | c | 1.4 | 1203 | 270 | 4.0 | 6.0 | 480 | 80 | 7.0 | 60 | 10 | 80 | (a) Inclination angle: 7 degrees | 6.0 | 7.0 | 600 | 80.1 | 480 | 21.4 | 4.5 | 817 | 78 | A | Inventive Example |
| 4 | b | 1.2 | 1502 | 279 | 4.2 | 7.5 | 500 | 60 | 4.0 | 300 | 1 | 40 | (c) Gap between electrode and sheets: 2 mm | 7.5 | 4.0 | 300 | 24.3 | 400 | 26.4 | 5.4 | 85 | 74 | B | Inventive Example |
| 5 | c | 1.4 | 1203 | 270 | 4.0 | 6.0 | 480 | 40 | 4.5 | 300 | 1 | 80 | (a) Inclination angle: 7 degrees | 6.0 | 4.5 | 300 | 25.0 | 400 | 26.8 | 4.5 | 169 | 78 | B | Inventive Example |
| 6 | b | 1.2 | 1502 | 279 | 4.0 | 6.5 | 480 | - | 3.0 | 200 | 0 | 40 | (c) Gap between electrode and sheets: 2 mm | 6.5 | 3.0 | 200 | 19.1 | 480 | 21.3 | 5.4 | 43 | 74 | F | Comparative Example |
| 7 | c | 1.4 | 1203 | 270 | 4.0 | 6.0 | 480 | 40 | 3.0 | 200 | 1 | 80 | (a) Inclination angle: 7 degrees | 6.0 | 3.0 | 200 | 18.0 | 480 | 21.4 | 4.5 | 50 | 78 | F | Comparative Example |
| 8 | d | 0.5 | 995 | 275 | 3.0 | 5.5 | 380 | 50 | 5.0 | 40 | 5 | 100 | (b) Offset between electrodes: 1 mm | 5.5 | 5.0 | 200 | 80.0 | 350 | 27.5 | 3.6 | 165 | 60 | A | Inventive Example |
| 9 | e | 1.0 | 780 | 270 | 3.5 | 7.0 | 400 | 20 | 9.0 | 20 | 6 | 300 | (a) Inclination angle: 6 degrees | 7.0 | 9.0 | 120 | 70.2 | 100 | 44.0 | 2.9 | 198 | 70 | A | Inventive Example |
| 10 | c | 1.4 | 1203 | 270 | 4.0 | 6.5 | 400 | - | 3.0 | 100 | 0 | 60 | (a) Inclination angle: 7 degrees | 6.5 | 3.0 | 100 | 15.2 | 600 | 13.2 | 4.5 | 21 | 78 | F | Comparative Example |
| 11 | f | 1.5 | 1020 | 270 | 4.0 | 7.0 | 460 | - | 5.0 | 400 | 0 | 80 | (a) Inclination angle: 5 degrees | 7.0 | 5.0 | 400 | 21.0 | 480 | 21.4 | 3.8 | 204 | 80 | B | Inventive Example |
| 12 | b | 1.2 | 1502 | 279 | 6.0 | 7.0 | 300 | 300 | 8.0 | 40 | 3 | 200 | (e) Distance to end face: 6 mm | 7.0 | 8.0 | 120 | 60.3 | 350 | 29.6 | 5.4 | 157 | 74 | A | Inventive Example |
| 13 | b | 1.2 | 1502 | 279 | 4.0 | 7.5 | 400 | 300 | 8.0 | 60 | 2 | 100 | (a) Inclination angle: 11 degrees | 7.5 | 8.0 | 120 | 21.0 | 480 | 21.3 | 5.4 | 137 | 74 | B | Inventive Example |
| 14 | g | 1.2 | 1502 | 279 | 5.0 | 9.0 | 500 | 100 | 8.2 | 70 | 6 | 200 | (a),(d) Inclination angle: 6 degrees Gap between sheets: 1 mm | 9.0 | 8.2 | 420 | 81.0 | 400 | 26.4 | 5.4 | 349 | 74 | A | Inventive Example |
| 15 | h | 1.2 | 1502 | 279 | 5.0 | 9.0 | 500 | 100 | 8.2 | 70 | 6 | 200 | (a),(d) Inclination angle: 6 degrees Gap between sheets: 1 mm | 9.0 | 8.2 | 420 | 83.0 | 400 | 26.4 | 5.4 | 349 | 74 | A | Inventive Example |
| 16 | i | 0.5 | 1870 | 279 | 4.5 | 8.5 | 400 | 80 | 9.5 | 60 | 5 | 200 | (a) Inclination angle: 5 degrees | 8.5 | 9.5 | 300 | 78.0 | 300 | 30.0 | 6.7 | 375 | 60 | A | Inventive Example |
| 17 | j | 1.0 | 2010 | 279 | 5.0 | 7.5 | 420 | 80 | 9.0 | 60 | 5 | 180 | (a),(c) Inclination angle: 5 degrees Gap between electrode and sheets: 1 mm | 7.5 | 9.0 | 300 | 83.0 | 400 | 26.0 | 7.2 | 432 | 70 | A | Inventive Example |
| 18 | k | 1.5 | 1870 | 990 | 4.5 | 6.5 | 280 | 160 | 10.0 | 60 | 4 | 100 | (a) Inclination angle: 5 degrees | 6.5 | 10.0 | 240 | 92.0 | 80 | 49.4 | 1.9 | 568 | 80 | A | Inventive Example |
| 19 | l | 1.5 | 2010 | 990 | 5.0 | 7.0 | 330 | 80 | 10.0 | 60 | 6 | 140 | (a) Inclination angle: 5 degrees | 7.0 | 10.0 | 360 | 80.0 | 200 | 41.0 | 2.0 | 735 | 80 | A | Inventive Example |
| 20 | c | 1.4 | 1203 | 270 | 4.0 | 6.0 | 480 | 80 | 11.0 | 60 | 3 | 80 | (a) Inclination angle: 7 degrees | 6.0 | 11.0 | 180 | 27.0 | 450 | 23.4 | 4.5 | 605 | 78 | A | Inventive Example |
| 21 | c | 1.4 | 1203 | 270 | 4.0 | 6.0 | 480 | 80 | 13.0 | 60 | 3 | 80 | (a) Inclination angle: 7 degrees | 6.0 | 13.0 | 180 | 22.0 | 450 | 23.4 | 4.5 | 845 | 78 | B | Inventive Example |

*1. $C_{Fe} \geq -[L \times (20 + C_{Si} \times 10) / 500] + 40 + C_{Si} \times 10$   (3)

*2. $TSmax / TSmin \geq 1.2$   (4)

*3. $(Ip / Im)^2 \times tp \geq 20 \times C_{Si} + 50$   (5)

As can be seen in Table 2, in the welded members in Inventive Examples, the LEM cracking evaluation rating was A or B, and the LEM cracking was found to be suppressed. Reference Signs List

| | |
|---|---|
| 1, 2, 3 | steel sheet |
| 4 | weld |
| 4a | nugget |
| 4b | welding heat-affected zone |
| 5 | Zn alloy layer |
| 6 | resistance spot welded member |
| 7 | faying surface of steel sheets |
| 8, 9 | welding electrode |

**Claims**

1. A resistance spot welded member comprising a plurality of overlapping steel sheets resistance-spot-welded together,

wherein at least one of the plurality of overlapping steel sheets is a galvanized steel sheet having a Zn-based coated layer on a surface thereof,
wherein a concentration of Fe in a Zn alloy layer formed between two steel sheets of the plurality of overlapping steel sheets is denoted as $C_{Fe}$ (mass%),
wherein a distance from an edge of a nugget to a position at which $C_{Fe}$ is measured is denoted as L (um), and
wherein $C_{Fe}$ and L satisfy relations of the following formulas (1) and (2):

$$C_{Fe} \geq 20, \qquad (1)$$

$$0 < L \leq 500. \qquad (2)$$

**2.** The resistance spot welded member according to claim 1, wherein a concentration of Si in a steel sheet of the plurality of overlapping steel sheets that has a highest Si content is denoted as Csi (mass%), and

wherein Csi satisfies a relation of the following formula (3):

$$C_{Fe} \geq -[L \times (20 + C_{Si} \times 10) \,/\, 500] + 40 + C_{Si} \times 10 \qquad (3)$$

wherein $C_{Fe}$ in formula (3) is the concentration of Fe (mass%) in the Zn alloy layer formed between the two steel sheets of the plurality of overlapping steel sheets, and wherein L is the distance (um) from the edge of the nugget to the position at which $C_{Fe}$ is measured.

**3.** The resistance spot welded member according to claim 1 or 2, wherein a tensile strength of a steel sheet of the plurality of overlapping steel sheets that has a highest tensile strength is denoted as TSmax (MPa), wherein a tensile strength of a steel sheet of the plurality of overlapping steel sheets that has a lowest tensile strength is denoted as TSmin (MPa), and
wherein TSmax and TSmin satisfy a relation of the following formula (4):

$$TSmax \,/\, TSmin \geq 1.2. \qquad (4)$$

**4.** A resistance spot welding method for the resistance spot welded member according to any one of claims 1 to 3, the method comprising:

a primary energization step of holding the plurality of overlapping steel sheets between a pair of welding electrodes and energizing the steel sheets under application of pressure to join the steel sheets together to thereby form the nugget; and
a secondary energization step of performing post-heat treatment after the formation of the nugget,
wherein an average current value in the primary energization step is denoted as Im (kA), wherein an average current value in the secondary energization step is denoted as Ip(kA), wherein a total energization time in the secondary energization step is denoted as tp (ms), and
wherein Im, Ip, and tp satisfy a relation of the following formula (5):

$$(Ip \,/\, Im)^2 \times tp \geq 20 \times C_{Si} + 50 \qquad (5)$$

wherein Csi in formula (5) is a concentration (mass%) of Si in a steel sheet of the plurality of overlapping steel sheets that has a highest Si content.

**5.** The resistance spot welding method for the resistance spot welded member according to claim 4, wherein, in the primary energization step, one or two or more selected from the following states (a) to (e) are satisfied in at least one welding spot immediately before the application of the pressure by the welding electrodes:

(a) a state in which an inclination angle between the welding electrodes and the plurality of overlapping steel sheets is 0.2 degrees or more;
(b) a state in which an amount of offset between the pair of welding electrodes is 0.1 mm or more;
(c) a state in which a gap of 0.5 mm or more is present between one of the welding electrodes and the plurality of overlapping steel sheets;
(d) a state in which a gap of 0.5 mm or more is present between at least one pair of steel sheets of the plurality of overlapping steel sheets; and
(e) a state in which a shortest distance from a center of the welding spot to a steel sheet end face of the plurality of overlapping steel sheets is 10 mm or less.

**6.** The resistance spot welding method for the resistance spot welded member according to claim 4 or 5,

the method further comprising, between the primary energization step and the secondary energization step, a non-energization step of suspending energization,
wherein the non-energization step and the secondary energization step are repeated two or more times after the primary energization step.

# FIG. 1

# FIG. 2

POSITION OF $C_{Fe}$ MEASUREMENT

EDGE OF NUGGET

A

L

THICKNESS DIRECTION

WIDTH DIRECTION

EP 4 393 628 A1

# FIG. 3

# FIG. 4

22

# FIG. 5

Csi = 1.0%

JOINT 1: A RATING
JOINT 2: A RATING
JOINT 3: B RATING
JOINT 4: F RATING

# FIG. 6

Csi = 2.0%

JOINT 5: A RATING
JOINT 6: A RATING
JOINT 7: B RATING
JOINT 8: F RATING

# FIG. 7

## INTERNATIONAL SEARCH REPORT

| International application No. |
|---|
| **PCT/JP2022/040410** |

**A.    CLASSIFICATION OF SUBJECT MATTER**

*B23K 11/11*(2006.01)i; *B23K 11/24*(2006.01)i; *C22C 38/00*(2006.01)i; *C22C 38/60*(2006.01)i
FI:    B23K11/11 540; B23K11/24 315; C22C38/00 301A; C22C38/60; C22C38/00 301T

According to International Patent Classification (IPC) or to both national classification and IPC

**B.    FIELDS SEARCHED**

Minimum documentation searched (classification system followed by classification symbols)

B23K11/11; B23K11/24; C22C38/00; C22C38/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-79416 A (TOYOTA MOTOR CORP.) 27 May 2021 (2021-05-27)<br>    entire text, all drawings | 1-6 |
| A | JP 2018-39019 A (NIPPON STEEL & SUMITOMO METAL CORP.) 15 March 2018<br>(2018-03-15)<br>    entire text, all drawings | 1-6 |
| A | JP 2017-510702 A (POSCO) 13 April 2017 (2017-04-13)<br>    entire text, all drawings | 1-6 |
| A | JP 46-2253 A (BECKER, Otto Alfred) 13 October 1971 (1971-10-13)<br>    entire text, all drawings | 1-6 |

☐ Further documents are listed in the continuation of Box C.        ☑ See patent family annex.

| | | |
|---|---|---|
| \*    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family | |

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/040410**

| Patent document cited in search report | | | Publication date (day/month/year) | Patent family member(s) | | | Publication date (day/month/year) |
|---|---|---|---|---|---|---|---|
| JP | 2021-79416 | A | 27 May 2021 | (Family: none) | | | |
| JP | 2018-39019 | A | 15 March 2018 | (Family: none) | | | |
| JP | 2017-510702 | A | 13 April 2017 | US entire text, all drawings WO EP KR CN | 2016/0319415 2015/099455 3088557 10-2015-0075291 105849304 | A1 A1 A1 A A | |
| JP | 46-2253 | A | 13 October 1971 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10195597 A
- JP 2003103377 A
- JP 2003236676 A
- WO 2016159169 A